# FASCICULE DE BREVET EUROPEEN

(11) **EP 0 733 475 B1**
(45) Date de publication et mention de la délivrance du brevet: **09.08.2000**
(21) Numéro de dépôt: 96400548.2
(22) Date de dépôt: 15.03.1996
(51) Int. Cl.: B32B 27/20, B32B 7/02

(54) **MATERIAUX COMPLEXES DE FLUORURE DE POLYVINYLIDENE ET D'UN THERMOPLASTE INCOMPATIBLE**
VERBUNDSTOFF AUS POLYVINYLIDENFLUORID UND EINEM DAMIT UNVERTRÄGLICHEN THERMOPLASTISCHEN KUNSTSTOFF
COMPOSITE MATERIAL COMPRISING POLYVINYLIDENE FLUORIDE AND A THERMOPLAST INCOMPATIBLE THEREWITH

(30) Priorité: 24.03.1995 FR 9503497
(43) Date de publication de la demande: 25.09.1996
(73) Titulaire: ELF ATOCHEM S.A., 92800 Puteaux, Hauts-de-Seine (FR)
(72) Inventeur: Strassel, Albert, 69600 Oullins (FR)
(74) Mandataire: Neel, Henry

(56) Documents cités:
- EP-A- 0 060 421
- WO-A-89/00499
- US-A- 4 824 728
- DATABASE WPI Section Ch, Week 8609 Derwent Publications Ltd., London, GB; Class A14, AN 86-057889 XP002006934 & JP-A-61 008 349 ( DENKI KAGAKU KOGYO KK) , 16 Janvier 1986

## Description

Les brevets français FR 2.577.564, FR 2.577.168, FR 2.415.000, FR 2.436.676 et FR 2.659.085 décrivent des compositions coextrudables de polyfluorure de vinylidène (PVDF) permettant de le faire adhérer à des résines thermoplastiques qui ne lui sont pas compatibles. Les complexes sont obtenus par coextrusion.

De cette façon, on peut par exemple coextruder le PVDF avec la composition destinée à le faire adhérer au polymère non compatible avec le PVDF, puis appliquer ce complexe sur le polymère non compatible ou bien coextruder directement les trois couches PVDF - composition nécessaire à l'adhésion - polymère non compatible avec le PVDF.

De tels complexes sont intéressants dans la mesure où leur structure est homogène ou unitaire par opposition à des complexes hétérogènes tels que par exemple des matériaux multicouches dont les couches sont collées entre elles et où les interfaces ne sont pas interpénétrées. Dans le cadre de ces inventions, faisant l'objet des brevets précités, on met en évidence des interdiffusions des polymères entre eux, ce qui conduit à une structure non discontinue (comme dans le collage), mais à une continuité à l'intérieur du matériau qui sera appelé : complexe unitaire.

Dans un système tel que décrit dans les brevets cités plus haut, le PVDF est au contact d'un liant d'adhésion avec lequel il est coextrudé. Ce liant, une fois appliqué sur le polymère non compatible avec le PVDF, soit par coextrusion, soit par thermopression, ne peut assurer l'adhésion entre PVDF et polymère non compatible que dans la mesure où il n'est pas dégradé au cours de l'utilisation du complexe. Les raisons de dégradations sont multiples : hydrolyse, attaque par des solvants ou autres produits chimiques, dégradation par photooxydation.

L'objet de la présente invention concerne donc un complexe unitaire à 3 couches au moins destiné à adhérer à un polymère non compatible avec le PVDF. Un second objet de l'invention concerne les complexes tricouches coextrudés directement avec le ou les polymères non compatibles avec le PVDF. L'invention concerne également le procédé de fabrication du complexe unitaire tricouche, ce complexe tricouche étant déclaré unitaire par opposition aux mêmes trois couches qui auraient été collées et qui ne présentent pas cette structure continue.

Plus précisément, l'invention concerne en premier lieu un complexe unitaire défini à la revendication 1.

Ce complexe est à même de protéger la composition d'adhésion des agressions extérieures.

Par agressions extérieures, on entend désigner notamment les actions de l'eau, les produits chimiques, les solvants, les gaz et les radiations dans l'U.V. et le visible.

Les complexes objet de l'invention, unitaires et homogènes, présentent une longévité aux agents chimiques et atmosphériques améliorée alliée à des propriétés de surface supérieures à celles de tous les autres complexes existants.

On comprend aisément que, dans les procédés ci-dessus cités, un PVDF pur en surface était incapable par lui-même d'apporter au liant d'adhésion une protection aux U.V., étant lui-même perméable à ceux-ci. Il est certes possible d'incorporer au PVDF des agents anti-U.V. organiques, mais ceux-ci, incompatibles avec la matrice PVDF, migrent en surface et disparaissent rapidement, par lessivage à l'eau par exemple, et, de toutes façons, cessent eux-mêmes de fonctionner après un certain temps. Une autre façon de procéder consiste à incorporer des charges et pigments barrière aux U.V.. On constate alors que les propriétés essentielles du PVDF sont sacrifiées et en particulier son imperméabilité aux liquides et aux gaz. Cette dernière est alors source d'agression du liant d'adhésion et on voit disparaître l'adhésion par hydrolyse et oxydation, quand ce n'est pas par solvant.

En outre, la présence de charges et pigments dans le PVDF entraîne une microporosité de celui-ci, lui ôtant ses qualités de non tachabilité, d'anti-salissure et d'anti-graffiti.

De plus, cette perméabilité a pour effet de laisser migrer en surface de la couche de PVDF des produits divers ajoutés au liant d'adhésion ou au substrat non compatible, ces produits et leurs produits de dégradation venant faire écran entre les agents extérieurs (U.V., O₂, H₂O) et la surface du PVDF.

Tous ces inconvénients sont supprimés dans le complexe unitaire tricouche objet de l'invention.

Ce complexe est généralement destiné à former, avec un matériau incompatible avec le PVDF, un nouveau complexe unitaire de 4 couches, soit par coextrusion, soit par thermopression.

Parmi les polymères incompatibles avec le PVDF, on peut citer notamment les polymères vinyliques chlorés comme le polychlorure de vinyle ou de vinylidène, les polymères styréniques comme le polystyrène ou le polystyrène choc, les polycarbonates, les polyuréthannes, les copolymères styrène-acrylonitrileélastomère acrylique greffés, les copolymères acrylonitrile-butadiène-styrène, les polyamides, les polyéther (block)amides, les polyoléfines telles que le polyéthylène ou le polypropylène ou leurs copolymères, les polyphénylène esthers (PPE) et particulièrement leurs alliages avec le polystyrène et/ou le polyamide. Par polymère incompatible avec le PVDF, on entend également les mélanges de ces polymères, ainsi que ces polymères ou mélanges contenant charges, plastifiants ou stabilisants.

Il va de soi que la couche de polymère incompatible peut être elle-même liée d'une façon quelconque avec un autre polymère, un métal et/ou un tissu.

Comme PVDF utilisable dans l'invention, on préférera un PVDF homopolymère mais, sous cette dénomination, sont également compris les copolymères contenant au moins 70 % en poids de restes de molécules de fluorure de vinylidène et leurs mélanges avec l'homopolymère, ainsi que les mélanges de PVDF et/ou copolymère du PVDF avec le polyméthacrylate d'alcoyle en C₁-C₄ et/ou polyéthylacrylate d'alcoyle C₁-C₄ contenant au moins 60 % en poids de PVDF homo- ou copolymère.

Pour les besoins de l'invention, le complexe unitaire tricouche comportera en surface une couche de PVDF telle que définie ci-avant, contenant au plus 5 % en poids de charges ou pigments ou autre additif. De préférence, il s'agira d'un PVDF homopolymère pur, sans additifs, pigments ou charges.

Cette couche aura une transmission lumineuse telle que l'absorption des photons de longueur d'onde 800 nm mesurée par spectrophotométrie équipée d'une sphère d'intégration sur un film de 50 µm d'épaisseur soit de préférence inférieure à 70 %.

A la seconde couche de PVDF, on ajoutera charges, pigments notamment un pigment nacrant, absorbeurs ou stabilisants U.V., plastifiants, nécessaires pour obtenir l'opacité aux rayons U.V. et visibles. Cette seconde couche aura une transmission lumineuse telle que l'absorption des photons de longueurs d'onde comprises entre 200 et 800 nm mesurée par spectrophotométrie équipée d'une sphère d'intégration sur un film de 50 µm d'épaisseur soit de préférence supérieure à 90 %.

A titre d'illustration des additifs rendant le PVDF opaque aux rayons U.V. et visibles, on citera notamment l'oxyde de titane, l'oxyde de zinc, le noir de carbone, l'oxyde d'antimoine, les pigments minéraux ou organiques, les absorbeurs U.V. à base de benzophénone.

A titre d'illustration des compositions d'adhésion de la troisième couche, on peut renvoyer aux compositions décrites dans les cinq brevets cités ci-dessus, et qui sont incorporés ici par référence.

Parmi ces compositions, on peut citer notamment les compositions à base de polyméthacrylate d'alcoyle, de polyuréthanne ou encore de polymère éthylène / CO.

Les épaisseurs respectives de ces trois couches seront à titre préférentiel :
- 1ère couche entre 10 µm et 300 µm,
- 2ème couche entre 10 µm et 300 µm,
- 3ème couche entre 10 µm et 200 µm.

Ces trois couches pourront être coextrudées selon les technologies habituelles de coextrusion de films, feuilles et plaques (telles que décrites dans les brevets cités).

Il va de soi que l'objet de l'invention ne se limite pas à la coextrusion de ce complexe unitaire tricouche, mais qu'elle est étendue à la coextrusion en un seul temps de ce tricouche avec le polymère non compatible avec le PVDF, ainsi qu'aux structures que forme le complexe tricouche thermopressé sur le polymère non compatible avec le PVDF, et cela selon les techniques classiques de coextrusion et de thermocollage.

L'invention concerne également les structures que forment le complexe tricouche collé ou thermopressé sur des substrats métalliques tels que acier, aluminium et/ou des tissus.

Enfin, fait également partie de l'invention l'obtention d'une structure polymère non compatible avec le PVDF dont au moins une face est protégée par au moins le complexe unitaire tricouche, les autres pouvant l'être par, outre ce tricouche, un bicouche objet des brevets cités ci-dessus ou autre matériau protecteur du polymère non compatible avec le PVDF.

Les exemples suivants illustrent l'invention.

### Exemples 1 et 2 et comparatifs 1c et 2c

On coextrude, à l'aide du matériel classique de coextrusion comportant quatre extrudeuses et une filière multicouches dans laquelle les quatre flux de matières viennent se superposer peu avant les lèvres de la filière, des plaques de composition suivante :

| | |
|---|---|
| 1ère couche | PVDF homopolymère de fluidité 2,2 à 2,5 g/10 min à 230°C sous 5 kg selon ISO 1133 (Kynar 1000 HD® d'Elf Atochem) pur ou contenant un pigment nacrant, |
| 2ème couche | PVDF homopolymère de fluidité 4,5 g à 5 g/10 min à 230°C sous 5 kg selon ISO 1133 (Kynar 4000 HD® d'Elf Atochem) contenant ou non des charges, |
| 3ème couche | Liant d'adhésion de composition en poids : |
| | - 35 PMMA (Altulite 2654®) (polyméthacrylate de méthyle et d'éthyle de viscosité apparente à 200°C de 6900 Pa.s au gradient de vitesse 3,54/s), |
| | - 30 PVDF (Kynar 4000®), |
| | - 35 Elastomère butadiène-styrène greffé méthacrylate (Paraloïd KM 323 B®), |
| 4ème couche | ABS (Cycolax X 399®) de viscosité apparente à 200°C de 15700 Pa.s au gradient de vitesse 3,54/s. |

Les épaisseurs respectives des quatre couches sont : 50 µm, 50 µm, 30 µm, 4 mm.

Dans les exemples ci-après, on fait uniquement varier les compositions des couches 1 et 2. On mesure la résistance au vieillissement par irradiation de 500 h à 60° C dans une enceinte de photovieilissement accéléré de type Sepap 12-24. Après vieillissement, on effectue des tests d'adhésion par pelage et de résilience selon la méthode Dynstat sur barreau non entaillé, la face qui a reçu les radiations étant en extension. On note également les changements de teinte éventuels.

Pour chaque couche 1 et 2, on a mesuré l'absorption des photons sur un film de 50 µm d'épaisseur.

| | | | **Après 500 h en enceinte Sepap 12-24 à 60° C** | | |
|---|---|---|---|---|---|
| **Ex**. | **Compositions des couches** | **Absorption lumineuse à 800 nm mesurée sur film 50 µm** | **Adhésion*** **N/m** | **Résilience en % de la valeur avant vieillissement** | **Coloration** |
| **1** | Couche 1 : | | | | |
| | Kynar transparent | 10 % | | | |
| | Couche 2 : | | > 2 200 | 100 % | Reste blanc |
| | Kynar avec 15% ZnO | 100 % | | | |
| **1c** | Couche 1 : | | | | |
| | Kynar transparent | 10 % | | | |
| | Couche 2: | | 1 200 | 50 % | Jaunissement |
| | Kynar avec 1 % pigment nacrant (1) | 40 % | | | |
| **2** | Couche 1 : | | | | |
| | Kynar + 2 % pigment | 60 % | | | |
| | nacrant (1) | | | | |
| | Couche 2 | | > 2 500 | 100 % | Reste blanc |
| | Kynar avec 15 % ZnO | 100 % | | | |
| **2c** | Couche 1 : | | | | |
| | Kynar + 2 % pigment | 60 % | | | |
| | nacrant (1) | | | | |
| | Couche 2 : | | 1 100 | 30 % | Brunissement |
| | Kynar transparent | 10 % | | | |

| | | | | | |
|---|---|---|---|---|---|
| *Adhésion sur éprouvettes 25 x 180 mm - vitesse d'étirage 250 mm/min. - Energie : W = (Résistance) / (largeur du front de pelage) exprimée en Newton par mètre | | | | | |
| (1) Iriodin 103® de Merck | | | | | |

### Exemples 3 et 4 et comparatifs 3c et 4c

On coextrude le film tricouche suivant :

| | |
|---|---|
| 1ère couche | PVDF homopolymère (Kynar 4000® d'Elf Atochem), |
| 2ème couche | PVDF copolymère fluorure de vinylidène/trifluorochloréthylène (90/10 en poids) de fluidité 3,5 à 4,5g/10 min à 230° C sous 5 kg selon ISO 1133 (Kynar 5050® d'Elf Atochem), |
| 3ème couche | Le liant d'adhésion de l'exemple 1 |
| Epaisseurs respectives | 100 µm, 80 µm, 50 µm. |

Ce film est obtenu par coextrusion-soufflage à l'aide du matériel classique comportant trois extrudeuses et une filière de coextrusion-soufflage. On obtient un film souple de 230 µm d'épaisseur.

Ce film est appliqué à chaud et sous pression entre les cylindres d'une calandre chauffée à 130° C recevant la masse fondue de PVC chargé d'oxyde de titane en sortie d'extrudeuse. En sortie de calandre, on obtient une plaque de PVC blanc revêtue du film tricouche. La plaque a au total 3 mm d'épaisseur.

| | | | **Après 500 h en enceinte Sepap 12-24 à 60°C** | |
|---|---|---|---|---|
| **Ex.** | **Composition des couches** | **Absorption lumineuse à 800 nm mesurée sur film 50 µm** | **Coloration** | **Adhésion N/m** |
| **3** | Couche 1 : | | | |
| | Kynar naturel | 10 % | | |
| | Couche 2 : | | reste blanc | 2 000 |
| | Kynar + 15 % ZnO | 100 % | | |
| **3c** | Couche 1 et Couche 2 : | 10 % | passé du blanc au noir | 300 |
| | Kynar naturel | | | |
| **4** | Couche 1 : | | | |
| | Kynar et 2 % de pigment | 60 % | reste blanc nacré | 2 300 |
| | nacrant (1) | | | |
| | Couche 2 : | | | |
| | Kynar + 15 % ZnO | 100 % | | |
| **4c** | Couche 1 : | | | |
| | Kynar et + 2 % pigment | | passé du blanc au brun | 350 |
| | nacrant (1) | 60 % | | |
| | Couche 2 : | | | |
| | Kynar naturel | 10 % | | |

| | | | | |
|---|---|---|---|---|
| (1) Iriodin 103® de Merck | | | | |

## Revendications

1. Complexe unitaire à structure continue caractérisé en ce qu'il comprend au moins trois couches successives constituées respectivement :
a/ de PVDF,
b/ de PVDF rendu opaque aux rayonnements U.V. et visibles,
c/ d'une composition apte à assurer l'adhésion entre du PVDF et un polymère thermoplastique non compatible avec le PVDF.

2. Complexe selon la revendication 1, caractérisé en ce que la couche de PVDF a présente une transmission lumineuse telle que l'absorption des photons de longueur d'onde 800 nm sur film de 50 µm soit inférieure à 70 %.

3. Complexe selon l'une quelconque des revendications 1 ou 2, caractérisé en ce que la couche de PVDF b présente une transmission lumineuse telle que l'absorption des photons de longueurs d'onde comprises entre 200 et 800 nm sur film de 50 µm soit supérieure à 90 %.

4. Complexe selon l'une quelconque des revendications 1 à 3, caractérisé en ce que les couches a, b, c ont respectivement les épaisseurs suivantes :
- couche a : 10 à 300 µm,
- couche b : 10 à 300 µm,
- couche c : 10 à 200 µm,

5. Complexe selon l'une quelconque des revendications 1 à 4, caractérisé en ce que la couche a est constituée de PVDF pur ou de PVDF contenant au plus 5 % de charges, pigments ou autres additifs.

6. Complexe selon l'une quelconque des revendications 1 à 5, caractérisé en ce que la couche b contient des charges, pigments, absorbeurs ou stabilisants U.V. ou plastifiants en quantité suffisante pour obtenir la transmission lumineuse de la revendication 3.

7. Complexe selon la revendication 5 , caractérisé en ce que les pigments sont présents au moins sous la forme d'un pigment nacrant.

8. Complexe selon la revendication 6, caractérisé en ce que la couche b contient de l'oxyde de zinc.

9. Complexe selon l'une des revendications 1 à 8 susceptible d'être obtenu par coextrusion des matériaux constituants les couches a, b et c.

10. Complexe selon l'une des revendications 1 à 9, caractérisé en ce que, dans les couches a et/ou b le PVDF est choisi dans le groupe constitué par le PVDF homopolymère, les copolymères contenant au moins 70 % en poids de reste de molécules de fluorure de vinylidène et leurs mélanges avec l'homopolymère ainsi que les mélanges de PVDF et/ou copolymères du PVDF avec un polyméthacrylate d'alcoyle en C₁-C₄ et/ou un polyéthacrylate d'alcoyle en C₁-C₄ contenant au moins 60 % en poids de PVDF homo-ou copolymère.

11. Structure comprenant un complexe selon l'un des revendications 1 à 10 adhérant par sa couche c/ à un polymère non compatible avec le PVDF et/ou un métal et/ou un tissu.

12. Structure selon la revendication 11, caractérisée en ce que le polymère non compatible avec le PVDF est choisi dans le groupe comprenant les polymères vinyliques chlorés, les polymères styréniques, les polycarbonates, les polyuréthannes, les copolymères styrène-acrylonitrile - élastomère acrylique greffés, les copolymères acrylonitrile - butadiène - styrène, les polyamides, les polyether(bloc)amides, les polyoléfines, les polyphenylène ethers (PPE), leurs alliages avec le polystyrène et/ou le polyamide.

13. Structure selon la revendication 12, caractérisé en ce que les polymères vinyliques chlorés sont le polychlorure de vinyle ou le polychlorure de vinylidène,

14. Structure selon la revendication 12, caractérisé en ce que les polymères styréniques sont le polystyrène ou le polystyrène choc.

15. Structure selon la revendication 12, caractérisé en ce que les polyoléfines sont le polyéthylène ou le polypropylène ou les copolymères d'éthylène et de propylène.

16. Structure selon la revendication 11 susceptible d'être obtenue par l'assemblage par thermopression d'un complexe selon l'une des revendications 1 à 10 avec le polymère, non compatible avec le PVDF, tel que défini dans l'une des revendications 12 à 15.

17. Structure selon la revendication 11, susceptible d'être obtenue par l'assemblage par collage d'un complexe selon l'une des revendications 1 à 10 avec un métal et/ou un tissu.

## Patentansprüche

1. Einheitlicher Komplex mit kontinuierlicher Struktur,
dadurch gekennzeichnet, daß
er mindestens drei aufeinanderfolgende Schichten aufweist, die aus
a) PVDF,
b) PVDF, das für UV-Strahlung und sichtbares Licht undurchlässig gemacht wurde, bzw.
c) einer Zusammensetzung, die für die Haftung zwischen dem PVDF und einem thermoplastischen Polymer, das mit PVDF nicht kompatibel ist, zu sorgen vermag,
bestehen.

2. Komplex nach Anspruch 1, dadurch gekennzeichnet, daß die Lichtdurchlässigkeit der Schicht a aus PVDF so groß ist, daß ein Film mit einer Dicke von 50 µm weniger als 70 % der Photonen mit einer Wellenlänge von 800 nm absorbiert.

3. Komplex nach einem der Ansprüche 1 und 2, dadurch gekennzeichnet, daß die Lichtdurchlässigkeit der Schicht b aus PVDF so groß ist, daß ein Film mit einer Dicke von 50 µm mehr als 90 % der Photonen mit einer Wellenlänge von 200 bis 800 nm absorbiert.

4. Komplex nach einem der Ansprüche 1 bis 3, dadurch gekennzeichnet, daß die Schichten a, b, c die folgende Dicke aufweisen:
- Schicht a: 10 bis 300 µm,
- Schicht b: 10 bis 300 µm,
- Schicht c: 10 bis 200 µm.

5. Komplex nach einem der Ansprüche 1 bis 4, dadurch gekennzeichnet, daß die Schicht a aus reinem PVDF oder einem PVDF, das höchstens 5 % Füllstoffe, Pigmente oder sonstige Additive enthält, besteht.

6. Komplex nach einem der Ansprüche 1 bis 5, dadurch gekennzeichnet, daß die Schicht b Füllstoffe, Pigmente, UV-Absorber oder UV-Stabilisatoren oder Weichmacher in einer solch großen Menge enthält, daß die in Anspruch 3 angegebene Lichtdurchlässigkeit erzielt wird.

7. Komplex nach Anspruch 5, dadurch gekennzeichnet, daß die Pigmente mindestens in Form eines Perlglanzpigments enthalten sind.

8. Komplex nach Anspruch 6, dadurch gekennzeichnet, daß die Schicht b Zinkoxid enthält.

9. Komplex nach einem der Ansprüche 1 bis 8, der durch Coextrusion der Materialien, die die Schichten a, b und c bilden, erhältlich ist.

10. Komplex nach einem der Ansprüche 1 bis 9, dadurch gekennzeichnet, daß das PVDF in den Schichten a und/oder b ausgewählt ist unter dem PVDF-Homopolymer, den Copolymeren, die mindestens 70 Gew.-% Reste des Vinylidenfluorid-Moleküls enthalten, und ihren Gemischen mit dem Homopolymer, sowie den Gemischen aus PVDF und/oder PVDF-Copolymeren mit einem Poly(C₁-C₄-alkylmethacrylat) und/oder einem Poly(C₁-C₄-alkylethacrylat), die mindestens 60 Gew.-% PVDF-Homopolymer oder PVDF-Copolymer enthalten.

11. Struktur, die einen Komplex nach einem der Ansprüche 1 bis 10 enthält, der über seine Schicht c mit einem mit PVDF nicht kompatiblen Polymer und/oder einem Metall und/oder einem Gewebe haftend verbunden ist.

12. Struktur nach Anspruch 11, dadurch gekennzeichnet, daß das mit PVDF nicht kompatible Polymer unter chlorhaltigen Vinylpolymeren, Styrolpolymeren, Polycarbonaten, Polyurethanen, Copolymeren aus Styrol, Acrylnitril, gepfropftem Acrylelastomer, Acrylnitril-Butadien-Styrol-Copolymeren, Polyamiden, Polyether(block)amiden, Polyolefinen, Polyphenylenethern (PPE), ihren Legierungen mit Polystyrol und/oder Polyamid ausgewählt ist.

13. Struktur nach Anspruch 12, dadurch gekennzeichnet, daß es sich bei den chlorhaltigen Vinylpolymeren um Polyvinylchlorid oder Polyvinylidenchlorid handelt.

14. Struktur nach Anspruch 12, dadurch gekennzeichnet, daß es sich bei den Styrolpolymeren um Polystyrol oder schlagzähes Polystyrol handelt.

15. Struktur nach Anspruch 12, dadurch gekennzeichnet, daß es sich bei den Polyolefinen um Polyethylen oder Polypropylen oder Ethylen-Propylen-Copolymere handelt.

16. Struktur nach Anspruch 11, die durch Verbindung eines Komplexes nach einem der Ansprüche 1 bis 10 mit dem Polymer, das mit PVDF nicht kompatibel ist und das wie in einem der Ansprüche 12 bis 15 definiert ist, durch Warmpressen erhältlich ist.

17. Struktur nach Anspruch 11, die durch Verbindung eines Komplexes nach einem der Ansprüche 1 bis 10 mit einem Metall und/oder einem Gewebe durch Verkleben erhältlich ist.

## Claims

1. Unitary complex with a continuous structure, characterized in that it comprises at least three successive layers consisting respectively:
a) of PVDF,
b) of PVDF rendered opaque to UV and visible radiation,
c) of a composition likely to ensure adhesion between PVDF and a PVDF-incompatible thermoplastic polymer.

2. Complex according to Claim 1, characterized in that the PVDF layer a has a light transmission such that the absorption of photons of wavelength 800 nm on a 50 µm film is less than 70 %.

3. Complex according to either of Claims 1 and 2, characterized in that the PVDF layer b has a light transmission such that the absorption of photons of wavelengths between 200 and 800 nm on a 50 µm film is greater than 90 %.

4. Complex according to any one of Claims 1 to 3, characterized in that the layers a, b, c have the following respective thicknesses:
- layer a: 10 to 300 µm,
- layer b: 10 to 300 µm
- layer c: 10 to 200 µm.

5. Complex according to any one of Claims 1 to 4, characterized in that the layer a consists of pure PVDF or of PVDF containing not more than 5 % of fillers, pigments or other additives.

6. Complex according to any one of Claims 1 to 5, characterized in that the layer b contains fillers, pigments, UV-absorbing agents, UV-stabilizing agents or plasticizers in a sufficient amount to obtain the light transmission of Claim 3.

7. Complex according to Claim 5, characterized in that the pigments are present at least in the form of a pearlescent pigment.

8. Complex according to Claim 6, characterized in that the layer b contains zinc oxide.

9. Complex according to one of Claims 1 to 8, which can be obtained by coextrusion of the materials constituting the layers a, b and c.

10. Complex according to one of Claims 1 to 9, characterized in that, in the layers a and/or b, the PVDF is chosen from the group consisting of PVDF homopolymer, copolymers containing at least 70% by weight of a residue of vinylidene fluoride molecules and mixtures thereof with the homopolymer, as well as mixtures of PVDF and/or PVDF copolymers with a poly(C₁-C₂)alkyl methacrylate and/or a poly(C₁-C₄)alkyl ethylacrylate containing at least 60 % by weight of PVDF homo- or copolymer.

11. Structure comprising a complex according to one of Claims 1 to 10, which adheres via its layer c to a PVDF-incompatible polymer and/or a metal and/or a fabric.

12. Structure according to Claim 11, characterized in that the PVDF-incompatible polymer is chosen from the group comprising chlorovinyl polymers, styrene polymers, polycarbonates, polyurethanes, styreneacrylonitrile - acrylic elastomer grafted copolymers, acrylonitrile - butadiene - styrene copolymers, polyamides, polyether(block)amides, polyolefins, polyphenylene ethers (PPE), and alloys thereof with polystyrene and/or polyamide.

13. Structure according to Claim 12, characterized in that the chlorovinyl polymers are polyvinyl chloride or polyvinylidene chloride.

14. Structure according to Claim 12, characterized in that the styrene polymers are polystyrene or impact polystyrene.

15. Structure according to Claim 12, characterized in that the polyolefins are polyethylene or polypropylene or copolymers of ethylene and propylene.

16. Structure according to Claim 11, which can be obtained by assembling, by heat-pressing, a complex according to one of Claims 1 to 10 with the PVDF-incompatible polymer as defined in one of Claims 12 to 15.

17. Structure according to Claim 11, which can be obtained by assembling by bonding, a complex according to one of Claims 1 to 10 with a metal or a fabric.
